# EUROPEAN PATENT APPLICATION

(11) **EP 3 922 824 A1**
(43) Date of publication of application: **15.12.2021**
(21) Application number: 21178880.7
(22) Date of filing: 10.06.2021
(51) Int. Cl.: F01P 11/18, F01P 11/04, G01F 23/26, B60K 11/02, F16L 37/00

(54) **COUPLING MEMBER WITH SENSOR**

(30) Priority: 12.06.2020 EP 20179723
(71) Applicant: Illinois Tool Works, Inc., Glenview, Illinois 60025 (US)
(72) Inventor: DUMAS, Pascal, Glenview, 60025 (US)
(74) Representative: HGF

(57) **Abstract**

A coupling member for coupling components within a coolant circuit is disclosed. The coupling member comprises a conduit having a first end configured to couple to a first component and a second end configured to couple to a second component, wherein in use a coolant fluid passes from the first component to the second component through the conduit. The coupling member further includes a sensor integral with the conduit and positioned between the first and second ends of the conduit, the sensor being configured to detect the presence of gas or air within the conduit.

## Description

The present invention relates to a coupling member for coupling components within a coolant circuit. In particular the present invention relates to a coupling member including an integrated sensor.

### Background

A vehicle cooling system can include numerous closed heat transfer fluid circuits / coolant circuits for cooling components, such as a battery cooling circuit and a powertrain cooling circuit. The heat transfer fluid will typically be circulated through a radiator or heat exchanger, to reduce the temperature of the heat transfer fluid. The heat transfer fluid will be circulated using pumps, and will typically circulate through degassing tanks, or expansion tanks. The heat transfer fluid flow rate through each of a battery cooling circuit and a powertrain cooling circuit might be as high as 20 litres/minute (l/min).

A loss of coolant due to a leak within these heat transfer fluid circuits can lead to a reduction in the efficiency of component cooling, which ultimately may lead to a loss of function of the component, for example engine failure. Similarly, bubbles or air-pockets due to air ingress (for example at a leak location) or incomplete degassing within the heat transfer fluid circuits can also lead to a reduction in the efficiency of component cooling.

It is known to monitor for loss of heat transfer fluid using one electrical pump that circulates the heat transfer fluid. For example, a change in torque (i.e. current intensity) required for circulation of the heat transfer fluid may be used as an indication of a loss of heat transfer fluid.

It is an aim of the present invention to provide a system that helps prevent component failure through loss a coolant flowing through a heat transfer fluid circuit.

### Brief Summary

According to a first aspect of the invention there is provided a coupling member for coupling components within a coolant circuit, the coupling member comprising:
a conduit having a first end configured to couple to a first component and a second end configured to couple to a second component, wherein in use a coolant fluid passes from the first component to the second component through the conduit; and a sensor integral with the conduit and positioned between the first and second ends of the conduit, the sensor being configured to detect the presence of gas or air within the conduit.

Aptly, the sensor is configured to measure the level of the coolant fluid flowing through the conduit and/or to detect the presence of an air-pocket within the conduit.

Aptly, the sensor is a level sensor being configured to measure the level of the coolant fluid flowing through the conduit.

Aptly, the sensor is an air-pocket sensor being configured to detect air-pockets within the coolant fluid flowing through the conduit.

Aptly, the sensor comprises two electrodes, each electrode extending into the interior volume of the conduit.

Aptly, the electrodes extend across about 10% to about 90% of the diameter of the conduit.

Aptly, the electrodes extend across at least about 80% of the diameter of the conduit.

Aptly, the first end and second end include attachment means for attaching to the first end and second components respectively.

Aptly, the attachment means of the first end or second end include a quick connect fitting.

Aptly, the first component and/or second component is a tubular member, preferably a hose member/rubber tube.

According to a second aspect of the invention there is provided a coolant circuit for an automotive component, for example an automotive engine, the coolant circuit comprising:
a first component;
a second component; and
a coupling member according to the first aspect of the invention, wherein a first end of the coupling member is coupled to the first component and a second end of the coupling member is coupled to the second component.

According to a third aspect of the invention there is provided a system for detecting lack of coolant fluid or air pockets within a coolant circuit, the system comprising:
a coupling member according to the first aspect of the invention; and
a processing unit configured to process signals received from the sensors of the coupling member.

Aptly, the processing unit is configured to:
determine if there is a change in the level of coolant fluid flowing through the conduit based on the processed signals; and/or
determine if there is an air-pocket present in the coolant fluid flowing through the conduit based on the processed signals.

According to another aspect of the invention there is provided a coupling member with an integrated level sensor, for detecting leaks within a coolant circuit, the coupling member comprising:
a conduit having a first end configured to couple to a first component and a second end configured to couple to a second component, wherein in use, a coolant fluid passes from the first component to the second component through the conduit; and
a level sensor integral with the conduit and positioned between the first and second ends of the conduit, the level sensor being configured to measure the level of the coolant fluid flowing through the conduit, especially the presence/lack of the coolant fluid flowing through the conduit.

Aptly, the level sensor comprises two electrodes, each electrode extending into the interior volume of the conduit.

Aptly, the first end and second end include attachment means for attaching to the first end and second components respectively.

Aptly, the attachment means of the first end and/or second end can include a quick connect fitting, configured to provide a locked push-fit connection

Aptly, the first component and/or second component is a tubular member, preferably a hose member/rubber tube.

According to another aspect of the invention there is provided a quick connect fitting for coupling components within a coolant circuit, the quick connect fitting comprising:
a conduit having a first end configured to couple to a first component and a second end configured to couple to a second component, wherein in use, a coolant fluid passes from the first component to the second component through the conduit;
a sensor integral with the conduit and positioned between the first and second ends of the conduit, the sensor being configured to detect the presence of air within the conduit (for example a level sensor positioned between the first and second ends of the conduit, the level sensor being configured to measure the level of the coolant fluid flowing through the conduit); and
attachment means at the first and/or second end of the conduit wherein the attachment means is configured to provide a locked push-fit connection with the first or second component respectively.

Examples of the present invention will now be described hereinafter, by way of example only, with reference to the accompanying drawings in which:
Figure 1 illustrates a side cross-section of an example of a coupling member;
Figure 2 illustrates a top view of the coupling member of Figure 1;
Figure 3 illustrates an axial view of the coupling member of Figure 1;
Figure 4 illustrates a side cross-section of another example of a coupling member;
Figure 5 illustrates a top view of the coupling member of Figure 4;
Figure 6 illustrates an axial view of the coupling member of Figure 4.
Figure 7 illustrates a side view of another example of a coupling member;
Figure 8 illustrates a side cross-section of the coupling member of Figure 7;
Figure 9 illustrates an axial cross-section of the coupling member of Figure 7;
Figure 10 illustrates a top view of the coupling member of Figure 7; and
Figure 11 illustrates an axial view of the coupling member of Figure 7.

In the drawings like reference numerals refer to like parts.

### Detailed Description

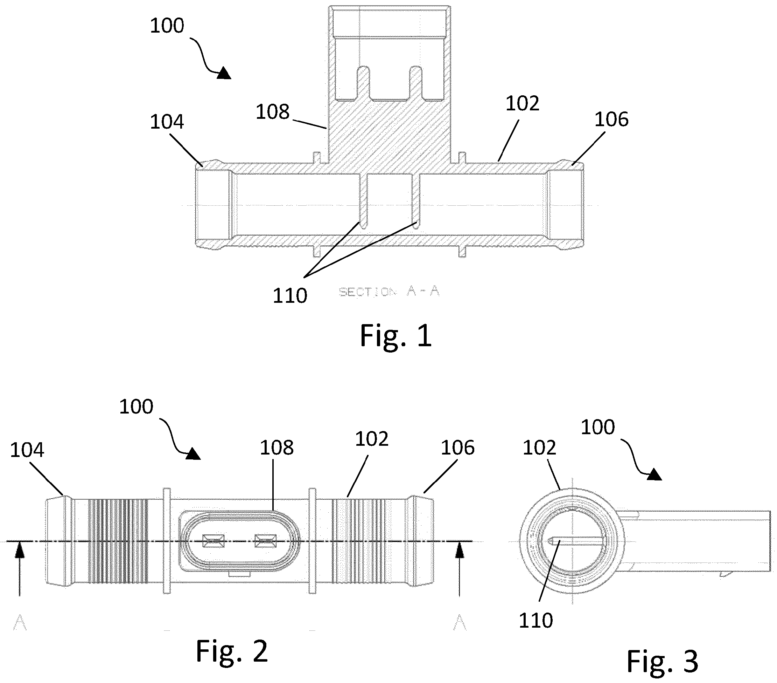

Figures 1 to 11 illustrate examples of coupling members for coupling components within a coolant circuit and monitoring the coolant fluid flowing within the coolant circuit.

Referring first to Figures 1 to 3, these Figures illustrate an example of a coupling member 100. The coupling member 100 includes a conduit 102 having a first end 104 configured to couple to a first component (not shown) and a second end 106 configured to couple to a second component (not shown). The conduit 102 defines an interior volume with first and second openings at the first and second ends 104, 106 respectively. In use, a coolant fluid passes from the first component to the second component (or vice versa) through the interior volume of the conduit 102.

The coupling member 100 further includes a sensor 108 positioned between the first and second ends 104, 106 of the conduit 102, the sensor 108 being configured to detect the presence of gas or air within the conduit 102. In general the presence of air within the coolant circuit is indicative of air ingress (for example a leak) into the coolant circuit or inefficient degassing of the coolant circuit.

More specifically, the sensor 108 detects the presence of air within the conduit 102 as coolant fluid passes through the interior volume thereof. Put another way, the sensor 108 detects the presence of air within the conduit 102 in use.

In this example, the sensor 108 is a 'level sensor' in that it measures the level of coolant fluid flowing through the conduit 102. That is, the level of coolant flowing through the interior volume of the conduit 102 is measured. In particular, the sensor 108 is configured to measure the height of fluid within the interior volume of the conduit 102 or a change in the height of fluid within the interior volume of the conduit 102. As such, a sub-optimal level of coolant fluid may be used as an indication of the presence of air within the conduit. Similarly, a decrease in the level of coolant fluid may be used as an indication of the presence of a leak within the coolant circuit. The sensor 108 is integral with the conduit 102.

In this example, the sensor comprises two electrodes 110, each electrode extending into the interior volume of the conduit 102. That is, each electrode 110 extends from the wall of the conduit 102 into the interior volume of the conduit 102. In this example, each electrode 110 extends from an upper wall of the conduit 102 or a substantially uppermost portion of the wall of the conduit 102 into the interior volume of the conduit 102. In this example the electrodes 110 extend into the interior volume of the conduit 102 in a direction that is substantially perpendicular to the axis of the conduit 102 (i.e. the direction of flow of coolant through the conduit 102).

In this example the electrodes 110 are spaced apart along the length of the conduit. That is, a first electrode 110 extends into the interior volume of the conduit 102 at a first position and a second electrode 110 extends into the interior volume of the conduit 102 at a second position, spaced along the length/axis of the conduit from the first position. In this manner, the electrodes 110 are arranged in-line with the direction of flow through the conduit 102. However, other arrangements are possible.

In this example, the electrodes are spaced from about 5mm to about 25mm apart, aptly 12mm apart.

In this example the electrodes 110 are steel pins.

In use, a current is passed between the electrodes 110 through the coolant fluid to create an electrical circuit. The electrodes 110 effectively function as a capacitor. The capacitance of the electrodes 110 can be used to determine the level of coolant fluid passing through the conduit 102, for example the presence of coolant or a lack of coolant. For example, a lower capacitance indicates a lower level of coolant within the conduit 102 and higher capacitance indicates a higher level of coolant within the conduit 102. Similarly a change in the capacitance of the electrodes 110 can be used to determine a change in the level of coolant fluid passing through the conduit 102.

In this example, the electrodes do not extend across the entire diameter of the conduit 102 (i.e. the internal diameter). This helps increase the sensitivity for detection of loss of coolant. That is, the level of coolant will more quickly drop below the reach of the electrodes if the electrodes do not extend across the entire diameter of the conduit 102. As such, the level sensor may be configured to provide an 'on/off' reading in that the electrodes 110 may detect the presence of coolant ('on') or a lack of coolant ('off'). For example, the electrodes 110 may extend across about 10% to about 90% of the diameter of the conduit 102.

In this example, the sensor 108 includes or is coupled to sensor hardware, for example a processing unit, (not shown) for any or all of the following: providing current to the electrodes 110, processing signals received from the electrodes, determining the level of coolant based on the signals received from the electrodes and communicating the level of the coolant to a user/control unit. The processing unit may be integral with the sensor 108 or located elsewhere (for example as part of a controller).

As an example, the coupling member 100 may be used as part of a heat transfer or coolant circuit for an automotive component, for example an automotive engine. Such a circuit may include components such as a radiator(s), heat exchanger(s), degassing tank(s) and a series of connecting conduits for the passage of fluid therebetween. The coupling member described herein may be used to couple these components (as first and second components) together. That is, the first end 104 of the coupling member 100 is coupled to the first component and the second end 106 of the coupling member 100 is coupled to the second component.

In the example illustrated in Figures 1 to 3, the first component and second component (neither are shown) are tubular members, preferably a hose member/rubber tube. That is, the coupling member 100 is configured to couple connecting hose members within the coolant circuit.

The first and second ends 104, 106 of the coupling member 100 include attachment means for attaching to the first and second components respectively. In this example, the attachment means include a raised edge or lip extending circumferentially around each of the first and second ends 104, 106. In this manner, the hose members may be held in place by the tension produced by stretching the hose member over the raised edge. A further attachment means, for example a jubilee clip or similar, may be used to provide additional attachment between the hose member and the corresponding end of the coupling member 100.

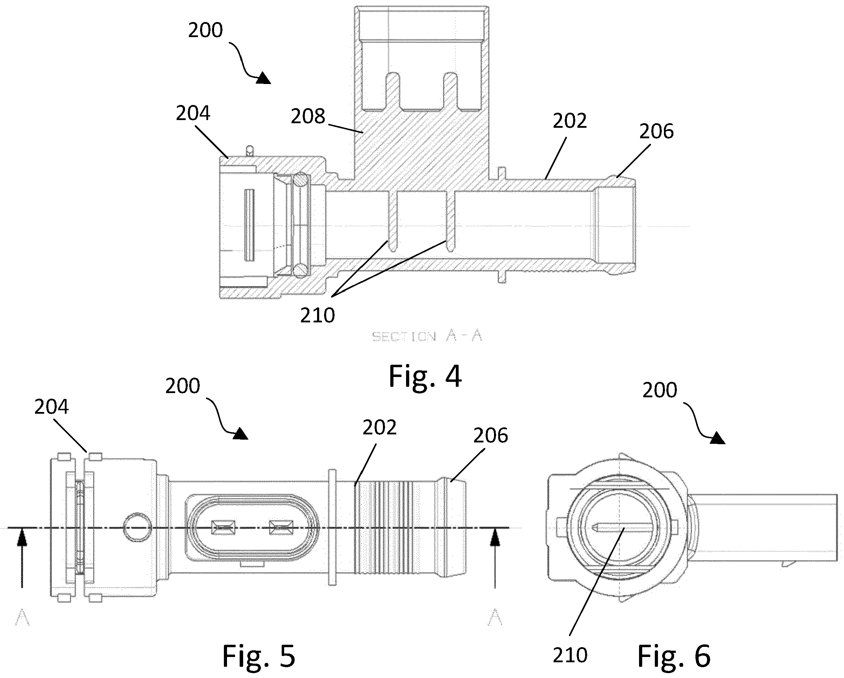

Figures 4 to 6 illustrate another example of a coupling member 200 for coupling components within a coolant circuit. Corresponding features to the coupling member 100 are labelled as such, with the prefix 2- in place of the prefix 1-. This example differs from that of coupling member 100 in that the attachment means of one of the ends includes a quick connect fitting / quick connect coupling (in this example the first end 204, although the second end 206 or both ends may include a quick connect fitting). Put another way, the coupling member 200 has a quick connect fitting integral with an end thereof. Or, the coupling member 200 is a quick connect fitting with an integral level sensor.

It would be understood that the 'quick connect fitting' is an attachment means configured to provide a locked push-fit connection with another component, for example a corresponding tube member port, terminal, inlet or outlet. The quick connect fitting may be fitted directly onto a degassing tank or radiator, removing an interface and therefore reducing the risk of leakage. Standard quick connect fittings of the type known in the art may be used.

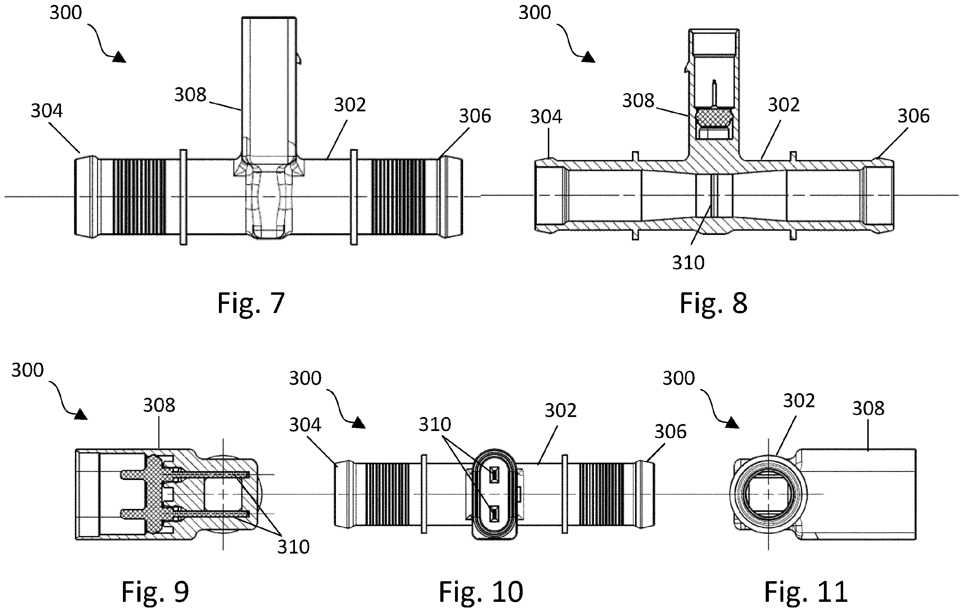

Figures 7 to 11 illustrate another example of a coupling member 300 for coupling components within a coolant circuit. Corresponding features to the coupling member 100 are labelled as such, with the prefix 3- in place of the prefix 1-.

Although in the example of Figures 7 to 11, the attachment means of the first and second ends 304, 306 correspond to those shown in the example of Figures 1 to 3, it would be understood that the attachment means shown in the example of Figures 4 to 6 may instead be used.

In this example, the coupling member 300 is configured to detect the presence of air within the coolant circuit in the form of air-pockets or bubbles. Such air-pockets may be indicative of inefficiency at the degassing stage after one filling service or a leak within the coolant circuit. Specifically, the sensor 308 is an air-pocket sensor configured to detect air-pockets within the coolant fluid flowing through the conduit.

As described above for previous examples, the electrodes 310 effectively function as a capacitor. The capacitance of the electrodes 310 can be used to determine the presence of air-pockets within the coolant fluid passing through the conduit 302. For example, a lower capacitance indicates the presence of an air-pocket (or larger air-pockets) within the conduit 302 and higher capacitance indicates the lack of air-pockets (or smaller air-pockets) within the conduit 302. In such examples the processing unit will determine if there is an air-pocket present in the coolant fluid based on the signals received from the electrodes.

In this example the electrodes 310 are spaced apart across the axial cross-section (i.e. width) of the conduit. That is, a first electrode 310 extends into the interior volume of the conduit 302 at a first position and a second electrode 310 extends into the interior volume of the conduit 302 at a second position, spaced from the first position in a direction perpendicular to the longitudinal axis of the conduit. In this manner, the electrodes 310 are arranged perpendicular with the direction of flow through the conduit 302. However, other arrangements are possible, for example the electrodes may be spaced apart along the length of the conduit.

In this example, the electrodes are spaced from about 5mm to about 25mm apart, aptly 12mm apart.

In this example, the electrodes 310 extend across substantially the entire diameter of the conduit 302 (i.e. the internal diameter). By providing the electrodes 310 across substantially the entire diameter of the conduit 302 the probability of an interaction between an electrode and an air-pocket is maximised. This increases the sensitivity for detection of air-pockets. In practice, however, the electrodes air-pocket detection may still be effective with the electrodes extending across at least about 80% of the diameter of the conduit.

It would be understood that the sensor 308 of the coupling member 300 may optionally also be configured to detect the presence of air within the conduit 302 in the form of both an air-pocket and a sub-optimal level of coolant fluid. In other words, the sensor 308 may be used as an air-pocket sensor and a level sensor. However, by configuring the sensor 308 in this way there may be a compromise on sensitivity - for example the arrangement and length of the electrodes 310 is such that the sensor 308 will be less sensitive in detecting a sub-optimal level of coolant fluid compared to sensor 108.

In such examples, the processing unit may post-process the signals received from the electrodes to attribute a change in capacitance due to (1) a drop in coolant fluid level; or (2) an air-pocket within the coolant fluid. For example, a permanent shift in capacitance may be used as an indication of a drop in coolant fluid level. That is, the steady-state capacitance value may be used as a metric for coolant fluid level. A temporary change in capacitance may be used as an indication of a passing air-pocket within the coolant fluid. That is, variation between spaced capacitance readings may be used as an indication of the presence of an air-pocket.

### Advantages

The above described arrangements provide the advantage that a coupling member is provided that helps detect leaks within a coolant circuit.

In the above arrangements a level sensor and/or air-pocket sensor is integrated within the coupling member. By integrating an apparatus for leak detection into/within/as part of a coupling member located in the coolant circuit itself, problems within the coolant circuit can be detected quickly in use. That is, there is a better response time when a loss of coolant or a degassing issue occurs. This allows problems to be flagged to the operator (for example the driver of an automotive vehicle utilising a coolant circuit to cool the engine and/or battery) quickly and efficiently to allow operations to be stopped prior to a failure event (for example engine failure).

The above described coupling member is versatile allowing it to be positioned at any position within the coolant circuit (not only just linked to a degassing tank or radiator), for example in a position where loss of coolant fluid is most likely. For example the coupling member can be implemented in order to detect the lack of coolant more sensitively / quickly than the circulation pump. For example the coupling member can be also implemented on a specific hose which is particularly pressure sensitive - for example operating at 'high' pressures, e.g. greater than about 2.5 or 3 bars, which makes leaks or hose disconnection more likely. The integration of the sensor within the coupling member is not affected by the end-fittings of the coupling member, allowing coupling members of this type to be used at a variety of positions within the coolant circuit. The above arrangements are particularly effective when the coupling member is substantially horizontal within the coolant circuit. This helps reduce the time response.

### Modifications

Various modifications to the detailed designs as described above are possible. For example, the coupling member may use any suitable level sensor, for example the level sensor may include a buoyant element / floatation member positioned within the interior volume of the conduit and configured so as to vary its position within the interior volume of the conduit depending on the level of the coolant fluid flowing through. The buoyant element may include a sensing element (for example a magnet) therein, configured to interact with a signal receiver in the level sensor. It is noted however that the use electrodes as a level sensor is particularly advantageous as there is minimal blockage/disruption to the flow cross-section within the conduit.

It will be clear to a person skilled in the art that features described in relation to any of the embodiments described above can be applicable interchangeably between the different embodiments.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A coupling member for coupling components within a coolant circuit, the coupling member comprising:
a conduit having a first end configured to couple to a first component and a second end configured to couple to a second component, wherein in use a coolant fluid passes from the first component to the second component through the conduit; and
a sensor integral with the conduit and positioned between the first and second ends of the conduit, the sensor being configured to detect the presence of gas or air within the conduit.

2. A coupling member according to claim 1, wherein the sensor is a level sensor being configured to measure the level of the coolant fluid flowing through the conduit.

3. A coupling member according to any preceding claim, wherein the sensor is an air-pocket sensor being configured to detect air-pockets within the coolant fluid flowing through the conduit.

4. A coupling member according to any preceding claim, wherein the sensor comprises two electrodes, each electrode extending into the interior volume of the conduit.

5. A coupling member according to claim 4, wherein the electrodes extend across about 10% to about 90% of the diameter of the conduit.

6. A coupling member according to claim 4, wherein the electrodes extend across at least about 80% of the diameter of the conduit.

7. A coupling member according to any preceding claim, wherein the first end and second end include attachment means for attaching to the first end and second components respectively.

8. A coupling member according to claim 7, wherein the attachment means of the first end or second end include a quick connect fitting.

9. A coupling member according to any preceding claim, wherein the first component and/or second component is a tubular member.

10. A coolant circuit for an automotive component, for example an automotive engine, the coolant circuit comprising:
a first component;
a second component; and
a coupling member according to any preceding claim, wherein a first end of the coupling member is coupled to the first component and a second end of the coupling member is coupled to the second component.

11. A system for detecting lack of coolant fluid or air pockets within a coolant circuit, the system comprising:
a coupling member according to any of claims 1 to 9; and
a processing unit configured to process signals received from the sensor of the coupling member.
